# EUROPEAN PATENT SPECIFICATION

(11) **EP 4 060 648 B1**
(45) Date of publication and mention of the grant of the patent: **27.05.2026**
(21) Application number: 20908965.5
(22) Date of filing: 17.12.2020
(51) Int. Cl.: G06F 1/16, G09F 9/00, G09F 9/30

(54) **ELECTRONIC DEVICE**
ELEKTRONISCHE VORRICHTUNG
DISPOSITIF ÉLECTRONIQUE

(30) Priority: 30.12.2019 CN 201911393588
(43) Date of publication of application: 21.09.2022
(73) Proprietor: Huawei Technologies Co., Ltd., Shenzhen, Guangdong 518129 (CN)
(72) Inventor: WANG, Yuan, Shenzhen, Guangdong 518129 (CN)
(74) Representative: Gill Jennings & Every LLP
(86) International application number: PCT/CN2020/137355
(87) International publication number: WO 2021/135976

(56) References cited:
- CN-A- 101 046 569
- CN-A- 101 609 216
- CN-A- 106 095 000
- CN-A- 106 788 536
- CN-A- 107 239 103
- CN-A- 107 239 103
- CN-A- 108 550 723
- CN-A- 111 128 006
- CN-U- 208 953 991
- US-B2- 7 581 938

## Description

This application claims priority to Chinese Patent Application No. 201911393588.0, filed with the Chinese Patent Office on December 30, 2019 and entitled "ELECTRONIC DEVICE".

### TECHNICAL FIELD

This application relates to the field of electronic device technologies, and in particular, to an electronic device.

### BACKGROUND

With gradual development of electronic device technologies, a display panel is usually disposed on an electronic device, to display text, a picture, a user interaction interface, or the like.

In related technologies, an electronic device includes a frame body and a display panel. Devices such as a battery and a circuit board are installed on an inner side of the frame body, and the display panel covers an outer side surface of the frame body. An annular adhesive ring is disposed between the display panel and the frame body. The adhesive ring is disposed close to an edge of the display panel, and the display panel may be adhered to the frame body by using the adhesive ring. The display panel is connected to the frame body by using the adhesive ring, so that a connection area can be reduced while sufficient connection force is ensured, and a connection structure between the display panel and the frame body can be also simplified.

However, in related technologies, the display panel is connected to the frame body by using the adhesive ring, and in a maintenance process of the electronic device, the display panel needs to be peeled off from the frame body. Consequently, disassembly of the display panel is relatively difficult, and the display panel is easily damaged in the disassembly process.

CN107239103A discloses a removable screen of a tablet comprising a display mounted to a shield frame by an easy-to-draw glue bond and a pulling head that passes through an opening.

CN208953991U a kind of electronic equipment comprising a shell and a display screen arranged on shell, and wherein easy-to-draw glue is set between shell and display screen and the easy-to-draw glue can fracture, the pulling portion being connected with the easy-to-draw glue and being exposed to outside the display screen.

### SUMMARY

The present invention is as set out in the claims.

In view of this, embodiments of this application provide an electronic device, to resolve technical problems that disassembly of a display panel is relatively difficult and the display panel is easily damaged in the disassembly process.

An embodiment of this application provides an electronic device, including a display panel, an adhesive film, and a frame body. The adhesive film is disposed between the display panel and the frame body, the adhesive film has a pulling head that extends outside the display panel and the frame body, and the adhesive film is an elastic adhesive film, or the adhesive film hardens after subjecting to tension parallel to the display panel, wherein the pulling head is disposed between a decorative sheet and the frame body. In other words, the adhesive film hardens and loses adhesion after subjecting to tension in a direction parallel to a plane on which the adhesive film is located, so that the adhesive film is separated from both the display panel and the frame body, and disassembly is easy.

In the electronic device provided in this embodiment of this application, one end of the adhesive film has the pulling head that extends outside the display panel and the frame body, and when the electronic device is maintained, the pulling head may be pulled to separate the adhesive film from the frame body and the display panel, and the adhesive film between the frame body and the display panel is gradually pulled out, so that the display panel is separated from the frame body, and the display panel is disassembled. The disassembly is relatively easy, force on the display panel is relatively small in the disassembly process, and the display panel is not damaged. In addition, the display panel is connected to the frame body by using the adhesive film, so that a part of the display panel can be prevented from being deformed by local force on the display panel.

In the electronic device, the adhesive film is in a strip shape, and the adhesive film is disposed along an edge of the display panel. A connection area between the adhesive film and each of the display panel and the frame body is reduced while a firm connection between the display panel and the frame body is ensured, thereby facilitating pulling out the adhesive film between the display panel and the frame body by using the pulling head.

In the electronic device, the electronic device further includes a decorative sheet, the decorative sheet covers an outer side surface that is of the frame body and that faces the display panel, and the decorative sheet is located at one end of the display panel. In this way, a decorative effect of the electronic device can be improved.

In the electronic device, the decorative sheet is provided with a metal layer or a coating in a specific color. In this way, the decorative effect of the electronic device can be further improved.

In the electronic device, the pulling head is disposed between the decorative sheet and the frame body. In this way, the pulling head located outside the display panel and the frame body can be prevented from affecting installation or work of another element in the electronic device.

In the electronic device, the outer side surface is provided with a groove, the pulling head is disposed in the groove, and the decorative sheet covers the groove.

In this way, when the electronic device is normally used, the decorative sheet can prevent the pulling head from protruding from the groove, so as to further prevent the pulling head located outside the display panel and the frame body from affecting installation or work of another element in the electronic device.

In the electronic device, the frame body has a decorative surface adjacent to the outer side surface, an arc-shaped chamfer is disposed at a junction of the outer side surface and the decorative surface, and the decorative sheet covers the arc-shaped chamfer.

In the electronic device, the decorative sheet includes a bent portion covering the arc-shaped chamfer and a fixed portion covering the decorative surface. In this way, the decorative effect of the electronic device can be further improved.

In the electronic device, a part of the display panel is located between the fixed portion and the arc-shaped chamfer. In this case, the bent portion of the decorative sheet can press the display panel on the arc-shaped chamfer, to prevent the display panel from being separated from the arc-shaped chamfer. In this case, the edge of the display panel is bent, so that the decorative effect of the electronic device can be further improved.

In the electronic device, the frame body is provided with an accommodation hole, and the pulling head is disposed in the accommodation hole.

In this way, the pulling head can be disposed in the accommodation hole, thereby preventing the pulling head from affecting installation or work of another element in the electronic device

In the electronic device, there are a plurality of adhesive films, the plurality of adhesive films are sequentially disposed along the edge of the display panel, each adhesive film is provided with at least one pulling head, and adjacent pulling heads are disposed in the same accommodation hole.

In this way, a quantity of holes disposed on the frame body can be reduced.

In the electronic device, the display panel covers the accommodation hole. The pulling head can be prevented from protruding from the accommodation hole during use.

In the electronic device, the frame body includes a first folding portion and a second folding portion that are rotatably connected, the display panel covers the first folding portion and the second folding portion, and an adhesive film is disposed between the display panel and both of the first folding portion and the second folding portion. The electronic device is a folding device, thereby improving user experience.

In the electronic device, the display panel includes a cover and a screen body located between the cover and the frame body, and the adhesive film is connected to the cover and the frame body, or the adhesive film is connected to the screen body and the frame body.

In this way, the adhesive film is connected to the cover or the screen body of the display panel, and when the pulling head is pulled, the adhesive film is separated from the frame body and the display panel, and the adhesive film between the frame body and the display panel is gradually pulled out, so that the display panel is separated from the frame body, and the display panel is disassembled. The disassembly is relatively easy, force on the display panel is relatively small in the disassembly process, and the display panel is not damaged.

In the electronic device, the adhesive film includes thermoplastic polyurethane rubber, or the adhesive film includes butyronitrile rubber and phenolic resin, or the adhesive film includes an easy-to-pull tape. The adhesive film has strong adhesion in a direction perpendicular to a plane on which the adhesive film is located, and has elasticity in a direction parallel to the plane on which the adhesive film is located.

Connection force between the elastic adhesive film and each of the display panel and the frame body is relatively large, and a connection area between the display panel and the frame body can be reduced while a firm connection between the frame body and the display panel is ensured. When the adhesive film is disposed between the cover and the frame body, a black edge caused by a connection between the cover and the adhesive film can be reduced. In addition, because a connection area between the cover and the adhesive film is reduced, an area of the screen body can be increased, and a screen-to-body ratio of the electronic device can be increased. When the easy-to-pull tape subjects to tension in a direction parallel to a plane on which the easy-to-pull tape is located, the easy-to-pull tape is deformed in the direction of the tension, so that the easy-to-pull tape rapidly hardens and loses adhesion, the deformed easy-to-pull tape is separated from the display panel and the frame body, and disassembly is relatively easy.

### BRIEF DESCRIPTION OF DRAWINGS

FIG. 1 is a first schematic diagram when an electronic device is a folding device according to an embodiment of the present invention;
FIG. 2 is a second schematic diagram when an electronic device is a folding device according to an embodiment of the present invention;
FIG. 3 is a third schematic diagram when an electronic device is a folding device according to an embodiment of the present invention;
FIG. 4 is a first cutaway drawing when an electronic device includes a non-bezel-less screen according to an embodiment of the present invention;
FIG. 5 is a second cutaway drawing when an electronic device includes a non-bezel-less screen according to an embodiment of the present invention;
FIG. 6 is a first cutaway drawing when an electronic device includes a bezel-less screen according to an embodiment of the present invention;
FIG. 7 is a second cutaway drawing when an electronic device includes a bezel-less screen according to an embodiment of the present invention;
FIG. 8 is a first schematic structural diagram of an adhesive film when an electronic device is a folding device according to an embodiment of the present invention;
FIG. 9 is a schematic diagram of a direction of pulling a pulling head when an electronic device is a folding device according to an embodiment of the present invention;
FIG. 10 is a second schematic structural diagram of an adhesive film when an electronic device is a folding device according to an embodiment of the present invention;
FIG. 11 is a third schematic structural diagram of an adhesive film when an electronic device is a folding device according to an embodiment of the present invention;
FIG. 12 is a schematic diagram of a connection between a decorative sheet and a first folding portion in an electronic device according to an embodiment of the present invention;
FIG. 13 is a first cutaway drawing when an electronic device has a decorative sheet according to an embodiment of the present invention;
FIG. 14 is a second cutaway drawing when an electronic device has a decorative sheet according to an embodiment of the present invention;
FIG. 15 is a third cutaway drawing when an electronic device has a decorative sheet according to an embodiment of the present invention;
FIG. 16 is a schematic diagram in which a decorative sheet is disposed on one side of a display panel when an electronic device is a folding device according to an embodiment of the present invention;
FIG. 17 is a fourth cutaway drawing when an electronic device has a decorative sheet according to an embodiment of the present invention;
FIG. 18 is a fifth cutaway drawing when an electronic device has a decorative sheet according to an embodiment of the present invention;
FIG. 19 is a first schematic structural diagram in which an accommodation hole is disposed when an electronic device is a folding device according to an embodiment of the present invention;
FIG. 20 is a first schematic structural diagram in which an accommodation hole in an electronic device is located outside a projection of a display panel on a frame body according to an embodiment of the present invention;
FIG. 21 is a second schematic structural diagram in which an accommodation hole in an electronic device is located outside a projection of a display panel on a frame body according to an embodiment of the present invention;
FIG. 22 is a second schematic structural diagram in which an accommodation hole is disposed when an electronic device is a folding device according to an embodiment of the present invention;
FIG. 23 is a first schematic structural diagram in which an accommodation hole in an electronic device is located inside a projection of a display panel on a frame body according to an embodiment of the present invention;
FIG. 24 is a second schematic structural diagram in which an accommodation hole in an electronic device is located inside a projection of a display panel on a frame body according to an embodiment of the present invention;
FIG. 25 is a first schematic structural diagram in which a plurality of pulling heads are disposed in each accommodation hole when an electronic device is a folding device according to an embodiment of the present invention;
FIG. 26 is a schematic structural diagram in which one pulling head is disposed in each accommodation hole when an electronic device is a folding device according to an embodiment of the present invention;
FIG. 27 is a second schematic structural diagram in which a plurality of pulling heads are disposed in each accommodation hole when an electronic device is a folding device according to an embodiment of the present invention;
FIG. 28 is a first schematic structural diagram of an adhesive film when an electronic device is a non-folding device according to an embodiment of the present invention;
FIG. 29 is a schematic diagram of a direction of pulling a pulling head when an electronic device is a non-folding device according to an embodiment of the present invention;
FIG. 30 is a second schematic structural diagram of an adhesive film when an electronic device is a non-folding device according to an embodiment of the present invention;
FIG. 31 is a third schematic structural diagram of an adhesive film when an electronic device is a non-folding device according to an embodiment of the present invention;
FIG. 32 is a first schematic diagram of a connection between a decorative sheet and a frame body when an electronic device is a non-folding device according to an embodiment of the present invention;
FIG. 33 is a second schematic diagram of a connection between a decorative sheet and a frame body when an electronic device is a non-folding device according to an embodiment of the present invention;
FIG. 34 is a first schematic structural diagram in which an accommodation hole is disposed when an electronic device is a non-folding device according to an embodiment of the present invention;
FIG. 35 is a second schematic structural diagram in which an accommodation hole is disposed when an electronic device is a non-folding device according to an embodiment of the present invention;
FIG. 36 is a first schematic structural diagram in which a plurality of pulling heads are disposed in each accommodation hole when an electronic device is a non-folding device according to an embodiment of the present invention;
FIG. 37 is a schematic structural diagram in which one pulling head is disposed in each accommodation hole when an electronic device is a non-folding device according to an embodiment of the present invention; and
FIG. 38 is a second schematic structural diagram in which a plurality of pulling heads are disposed in each accommodation hole when an electronic device is a non-folding device according to an embodiment of the present invention.

### Description of reference numerals:

10: Frame body;
20: Adhesive film;
30: Display panel;
40: Decorative sheet;
101: First folding portion;
102: Second folding portion;
103: Arc-shaped chamfer;
104: Groove;
105: Accommodation hole;
201: Pulling head;
202: First adhesive film;
203: First pulling head;
204: Second adhesive film;
205: Second pulling head;
301: Cover;
302: Screen body;
401: Bent portion;
402: Fixed portion.

### DESCRIPTION OF EMBODIMENTS

Terms used in implementations of this application are merely used to explain specific embodiments of this application, but are not intended to limit this application. The following describes the implementations of the embodiments of this application in detail with reference to accompanying drawings.

An embodiment of this application provides an electronic device. The electronic device includes but is not limited to a mobile or fixed terminal with a display panel, for example, a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), an event data recorder, a wearable device, and a virtual reality device.

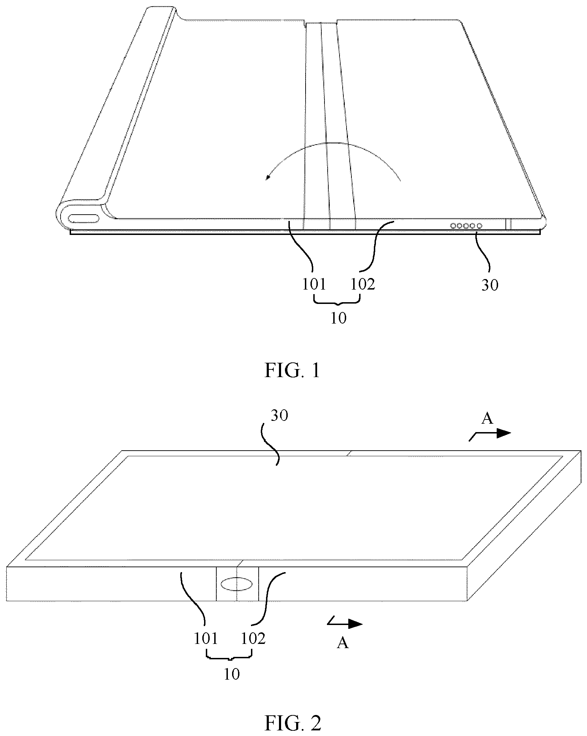

As shown in FIG. 1, in this embodiment of this application, the electronic device may be a folding device, and a corresponding display panel 30 is a flexible display panel. For example, the display panel 30 may be an organic light-emitting diode (OLED) display panel.

A frame body 10 in the electronic device includes a first folding portion 101 and a second folding portion 102, the first folding portion 101 and the second folding portion 102 may be rotatably connected by using a rotating shaft or a hinge, and the display panel 30 covers the first folding portion 101 and the second folding portion 102. When folding is performed, the first folding portion 101 rotates relative to the second folding portion 102, and the display panel 30 bends at the same time. As shown in FIG. 1, the display panel 30 is disposed under the frame body 10, and after the electronic device is folded, the first folding portion 101 and the second folding portion 102 overlap, and the display panel 30 is exposed to the outside. Certainly, in this embodiment, the display panel 30 may also be disposed on the frame body 10, and after the electronic device is folded, the display panel 30 is located between the first folding portion 101 and the second folding portion 102.

Devices such as a circuit board and a battery may be disposed on an inner side that is of the frame body 10 and that is away from the display panel 30. For example, when the electronic device is a mobile phone, the frame body 10 may be a middle frame of the mobile phone. When the electronic device is another device, the frame body 10 may be a frame carrying the display panel 30.

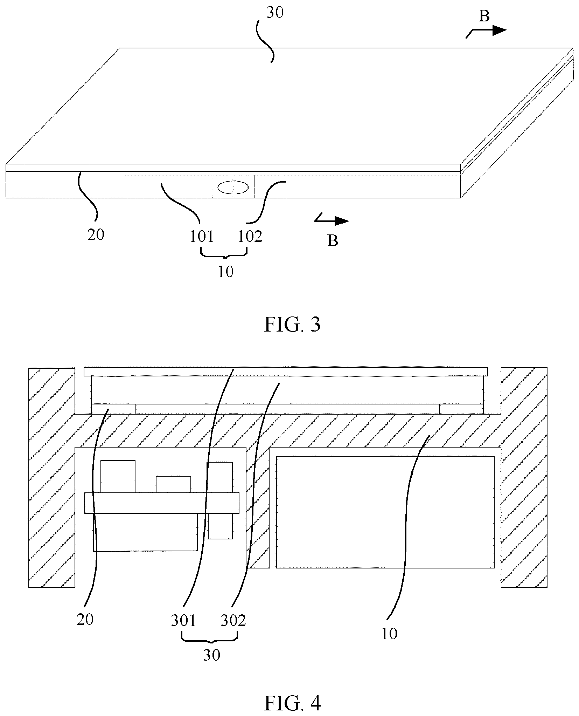

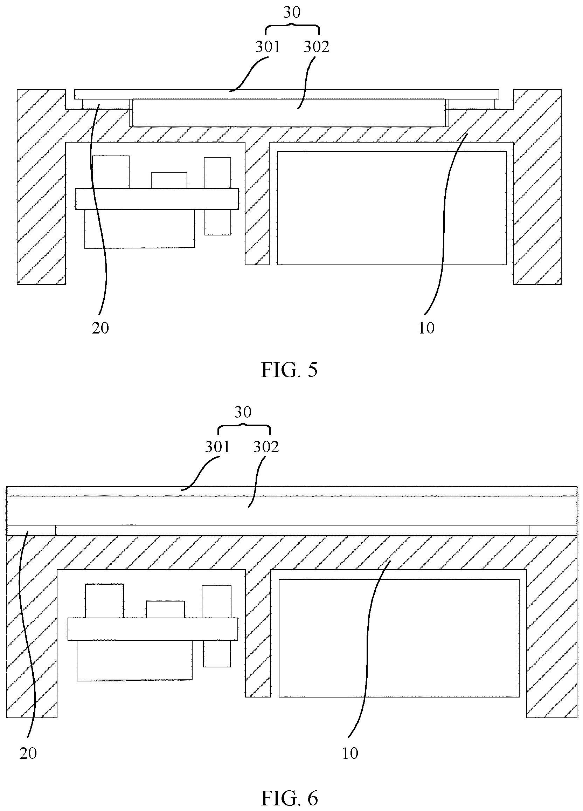

As shown in FIG. 2, when the electronic device is shown as a folding device, the electronic device may include a non-bezel-less screen, a flange is disposed on an outer side surface that is of the frame body 10 and that faces the display panel 30, and the flange is disposed around the display panel 30. FIG. 4 may be a cutaway drawing in an A-A direction in FIG. 2. As shown in FIG. 4, the display panel 30 is connected to the frame body 10 by using an adhesive film 20, and the adhesive film 20 may be disposed along an edge of the display panel 30, to connect the display panel 30 to the frame body 10. The display panel 30 may include a screen body 302 and a cover 301 covering the screen body 302, and the cover 301 is connected to the screen body 302. The adhesive film 20 may be disposed between the screen body 302 and the frame body 10, to implement a connection between the screen body 302 and the frame body 10. FIG. 5 may also be a cutaway drawing in the A-A direction in FIG. 2. As shown in FIG. 5, the adhesive film 20 may be further disposed between the cover 301 and the frame body 10. A projection area of the corresponding cover 301 on the frame body 10 is greater than a projection area of the screen body 302 on the frame body 10. An installation groove is disposed on the outer side surface of the frame body 10, and the screen body 302 is accommodated in the installation groove. The adhesive film 20 is disposed outside the installation groove and between the frame body 10 and the cover 301, to implement a connection between the cover 301 and the frame body 10, and the cover 301 may confine the screen body 302 in the installation groove.

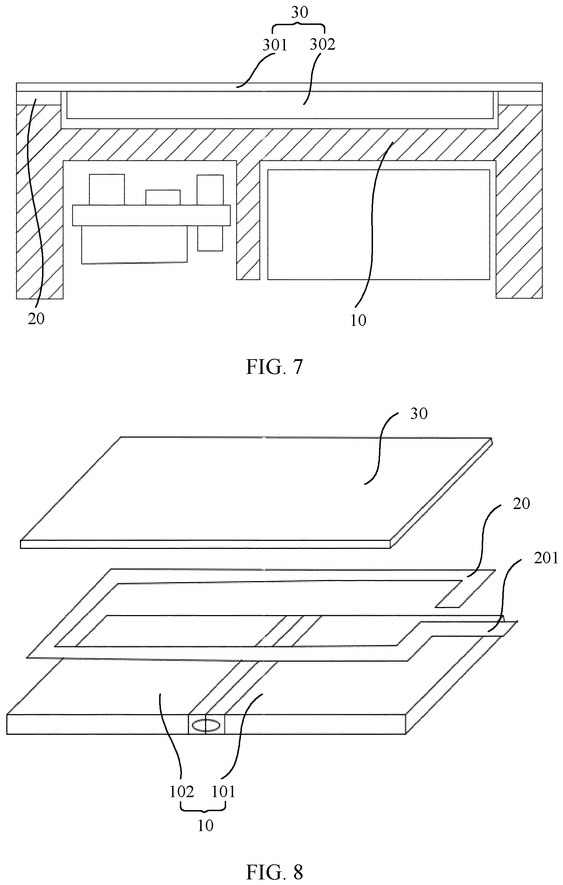

As shown in FIG. 3, the electronic device may alternatively be a device with a bezel-less screen. A projection of the display panel 30 on the frame body 10 overlaps with the outer side surface that is of the frame body 10 and that faces the display panel 30. The bezel-less screen can increase a screen-to-body ratio of the electronic device. FIG. 6 may be a cutaway drawing in a B-B direction in FIG. 3. As shown in FIG. 6, projections, on the frame body 10, of the cover 301 and the screen body 302 in the display panel 30 overlap. Alternatively, FIG. 7 may also be a cutaway drawing in the B-B direction in FIG. 3. As shown in FIG. 7, a projection, on the frame body 10, of the screen body 302 in the display panel 30 is located inside a projection of the cover 301 on the frame body 10.

As shown in FIG. 8, the adhesive film 20 is disposed along an edge of the display panel 30, the adhesive film 20 is in a strip shape, and one end of the adhesive film 20 has a pulling head 201 that extends outside the display panel 30 and the frame body 10. When the electronic device is maintained, the adhesive film 20 may be separated from the frame body 10 and the display panel 30 by pulling the pulling head 201, and the adhesive film 20 between the frame body 10 and the display panel 30 is gradually pulled out, so that the display panel 30 is separated from the frame body 10, and the display panel 30 is disassembled. The disassembly is relatively easy, force on the display panel 30 is relatively small in the disassembly process, and the display panel 30 is not damaged. In addition, the display panel 30 is connected to the first folding portion 101 and the second folding portion 102 by using the adhesive film 20. Compared with a fact in which the display panel 30 is connected to the first folding portion 101 and the second folding portion 102 by using glue, a part of the display panel 30 can be prevented from being deformed by local force on the display panel 30.

In this embodiment, the adhesive film 20 is in the strip shape, so that a connection area between the adhesive film 20 and each of the display panel 30 and the frame body 10 can be reduced while a firm connection between the display panel 30 and the frame body 10 is ensured, thereby facilitating pulling out the adhesive film 20 between the display panel 30 and the frame body 10 by using the pulling head 201.

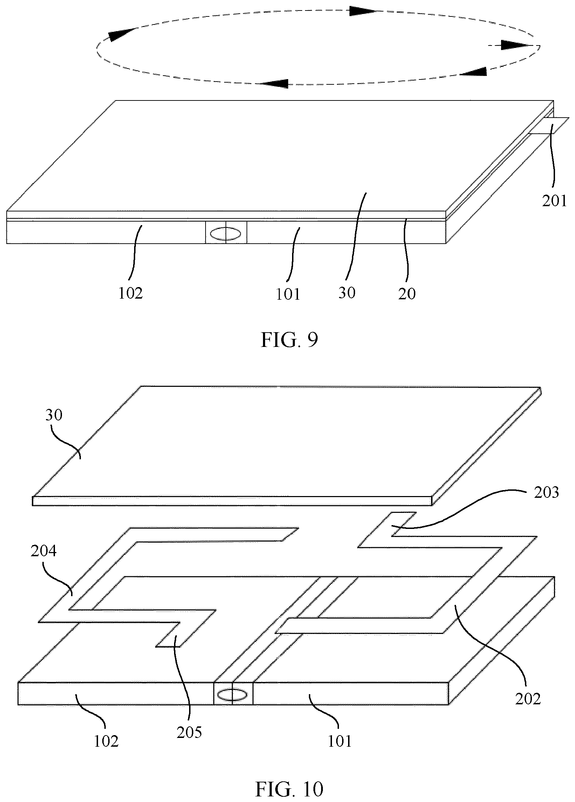

When the display panel 30 is disassembled, a direction of pulling the pulling head 201 may be shown by a dashed line in FIG. 9, and the pulling head 201 is pulled from a direction parallel to the display panel 30 to a direction away from the display panel 30 (to be specific, to the outside of the electronic device), so that a part of the adhesive film 20 is pulled out, and then remaining adhesive film 20 is sequentially pulled out along a direction surround the display panel 30, thereby separating the display panel 30 from the frame body 10. It should be noted that the adhesive film 20 needs to have sufficient strength in the direction parallel to the display panel 30, to prevent the adhesive film from breaking when the pulling head 201 is being pulled.

In an implementation, the adhesive film 20 may be an elastic adhesive film, and the elastic adhesive film mainly includes thermoplastic polyurethane (Thermoplastic polyurethanes, TPU for short) rubber, or mainly includes butyronitrile rubber and phenolic resin. In this way, the elastic adhesive film has strong adhesion in a direction perpendicular to a plane on which the elastic adhesive film is located, to ensure sufficient connection force between the display panel 30 and the frame body 10. The elastic adhesive film has specified elasticity in a direction parallel to the plane on which the elastic adhesive film is located, and when the pulling head 201 of the adhesive film is pulled, force is locally applied to a junction of the elastic adhesive film and the pulling head 201, so that the elastic adhesive film is separated from the display panel 30 and the frame body 10. Then, the pulling head 201 continues to be pulled, and the elastic adhesive film between the display panel 30 and the frame body 10 may be gradually pulled out, so that the display panel 30 is separated from the frame body 10.

Further, since connection force between the elastic adhesive film and each of the display panel 30 and the frame body 10 is relatively large, a connection area between the display panel 30 and the frame body 10 can be reduced while a firm connection between the frame body 10 and the display panel 30 is ensured. Still referring to FIG. 5 and FIG. 7, when the adhesive film 30 is disposed between the cover 301 and the frame body 10, a black edge caused by a connection between the cover 301 and the adhesive film 20 can be reduced. In addition, because a connection area between the cover 301 and the adhesive film 20 is reduced, an area of the screen body 302 can be increased, and a screen-to-body ratio of the electronic device can be increased.

In another implementation, the adhesive film 20 may alternatively be an easy-to-pull tape mainly including a material based on rubber, polyurethane, or the like. The easy-to-pull tape has specified adhesion in a direction perpendicular to a plane on which the easy-to-pull tape is located, and the display panel 30 may be adhered to the frame body 10. When the pulling head 201 is pulled, the easy-to-pull tape subjects tension in a direction parallel to the plane on which the easy-to-pull tape is located, the easy-to-pull tape is deformed in the direction of the tension, so that the easy-to-pull tape rapidly hardens and loses adhesion, and the deformed easy-to-pull tape is separated from the display panel 30 and the frame body 10. Then, the pulling head 201 continues to be pulled, and the easy-to-pull tape between the display panel 30 and the frame body 10 is gradually pulled out, so that the display panel 30 is separated from the frame body 10.

In this embodiment, there may be a plurality of extension shapes of the adhesive film 20 in the strip shape may extend between the display panel 30 and both of the first folding portion 101 and the second folding portion 102 in a plurality of shapes. For example, as shown in FIG. 8, the adhesive film 20 may extend between the display panel 30 and both of the first folding portion 101 and the second folding portion 102 in a shape of a straight line, and the pulling head 201 may be disposed at either end of the adhesive film 20 in an extension direction, or pulling heads 201 are disposed at both ends of the adhesive film 20 in the extension direction. When the pulling heads 201 are disposed at both ends of the adhesive film 20 in the extension direction, the adhesive film 20 between the display panel 30 and the frame body 10 may be pulled out by pulling either of the pulling heads 201, thereby disassembling the display panel 30. In addition, the pulling heads 201 are disposed at both ends of the adhesive film 20 in the extending direction, so that the display panel 30 may be further prevented from being unable to be disassembled when one pulling head 201 is damaged. Certainly, the adhesive film 20 may further extend in a curved shape between the display panel 30 and each of the first folding portion 101 and the second folding portion 102, and an area of the adhesive film 20 between the display panel 30 and each of the first folding portion 101 and the second folding portion 102 may be increased, thereby improving connection force between the display panel 30 and each of the first folding portion 101 and the second folding portion 102.

In this embodiment, still referring to FIG. 8. the adhesive film 20 may be continuously disposed between the display panel 30 and each of the first folding portion 101 and the second folding portion 102. Certainly, the adhesive film 20 may also be discontinuously disposed between the display panel 30 and each of the first folding portion 101 and the second folding portion 10210. For example, as shown in FIG. 10, the adhesive film 20 includes a first adhesive film 202 and a second adhesive film 204. The first adhesive film 202 is disposed between the first folding portion 101 and the display panel 30, and the second adhesive film 204 is disposed between the second folding portion 102 and the display panel 30. Corresponding pulling heads 201 include a first pulling head 203 disposed at one end of the first adhesive film 202 and a second pulling head 205 disposed at one end of the second adhesive film 204. During disassembly, the first pulling head 203 is first pulled to pull out the first adhesive film 202 between the first folding portion 101 and the display panel 30, and then the second pulling head 205 is pulled to pull out the second adhesive film 204 between the second folding portion 102 and the display panel 30, so as to separate that display panel 30 from the frame body 10.

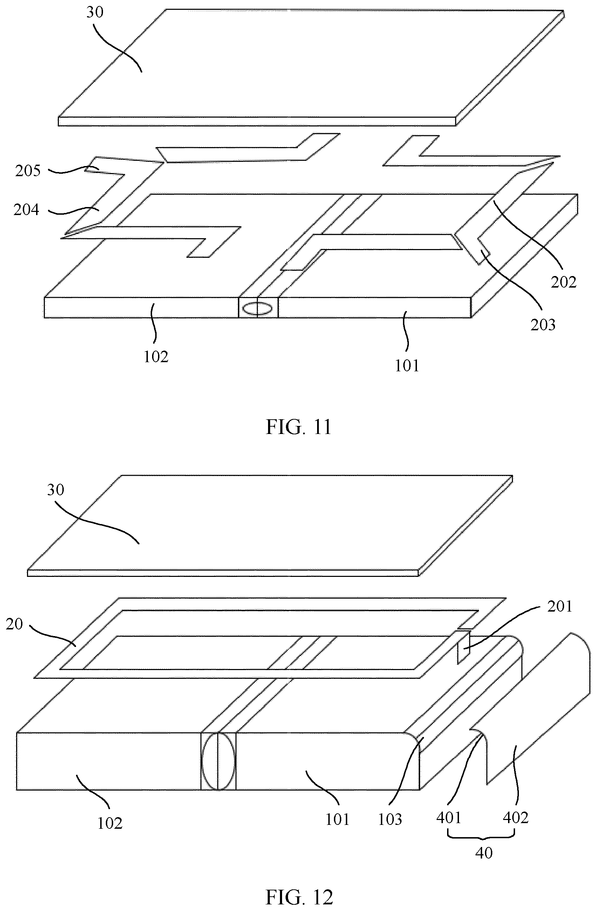

As shown in FIG. 11, in this embodiment, there may be a plurality of first adhesive films 202 disposed between the first folding portion 101 and the display panel 30, and each first adhesive film 20 is provided with a first pulling head 203 that extends outside the first folding portion 101 and the display panel 30. There may be a plurality of second adhesive films 204 disposed between the second folding portion 102 and the display panel 30, and each second adhesive film 204 is provided with a second pulling head 205 that extends outside the second folding portion 102 and the display panel 30. During disassembly, the first pulling heads 203 may be sequentially pulled to pull out the first adhesive films 202 between the first folding portion 101 and the display panel 30, so as to separate the display panel 30 from the first folding portion 101. Then, the second pulling heads 205 are sequentially pulled to pull out the second adhesive films 204 between the second folding portion 102 and the display panel 30, so as to separate the display panel 30 from the second folding portion 102, thereby disassembling the display panel 30.

Based on the embodiment in which the electronic device is a folding device, the electronic device may further include a decorative sheet 40. The decorative sheet 40 is disposed on the first folding portion 101 and/or the second folding portion 102, to improve a decorative effect of the electronic device.

As shown in FIG. 12, the decorative sheet 40 includes a bent portion 401, an arc-shaped chamfer 103 is disposed at a junction of an outer side surface that is of the first folding portion 101 and that faces the display panel 30 and a decorative surface that is adjacent to the outer side surface on the first folding portion 101, and the bent portion 401 covers the arc-shaped chamfer 103. The pulling head 201 of the adhesive film is sandwiched between the arc-shaped chamfer 103 and the bent portion 401. In this way, the pulling head 201 located outside the display panel 30 and the first folding portion 101 may be prevented from affecting installation or work of another element in the electronic device. In addition, the decorative sheet 40 covers the first folding portion 101, so that the decorative effect of the electronic device is improved.

Further, the decorative sheet may further include a fixed portion 402. The bent portion 401 of the decorative sheet 40 covers the arc-shaped chamfer 103, and the fixed portion 402 of the decorative sheet 40 covers the decorative surface, so as to further improve the decorative effect of the electronic device. It should be noted that a color of the decorative sheet 40 may be the same as or different from a color of the first folding portion 101, and an example decorative sheet 40 may be red, green, blue, or the like. Certainly, a decorative layer may also be disposed on a side surface that is of the decorative sheet 40 and that is away from the first folding portion 101. The decorative layer may be a metal layer or a coating in a specific color, so as to improve the decorative effect of the decorative sheet 40.

Further, the display panel 30 may extend toward the decorative surface, and a part of the display panel 30 also covers the arc-shaped chamfer 103. In this case, the bent portion 401 of the decorative sheet 40 may press the display panel 30 on the arc-shaped chamfer 103, thereby preventing the display panel 30 from being separated from the arc-shaped chamfer 103. In this case, an edge of the display panel 30 is bent, so that the decorative effect of the electronic device can be further improved.

In this embodiment, the decorative sheet 40 may be connected to the first folding portion 101 in a plurality of manners. For example, the decorative sheet 40 may be connected to the first folding portion 101 in a snap connection manner. Certainly, the decorative sheet 40 may be further adhered to the first folding portion 101 by using adhesive glue. When the display panel 30 needs to be disassembled, the decorative sheet 40 is first disassembled from the first folding portion 101, to expose the pulling head 201 located between the bent portion 401 and the first folding portion 101. Then, the pulling head 201 is pulled to gradually pull out the adhesive film 20 between the display panel 30 and each of the first folding portion 101 and the second folding portion 102, thereby separating the display panel 30 from each of the first folding portion 101 and the second folding portion 102.

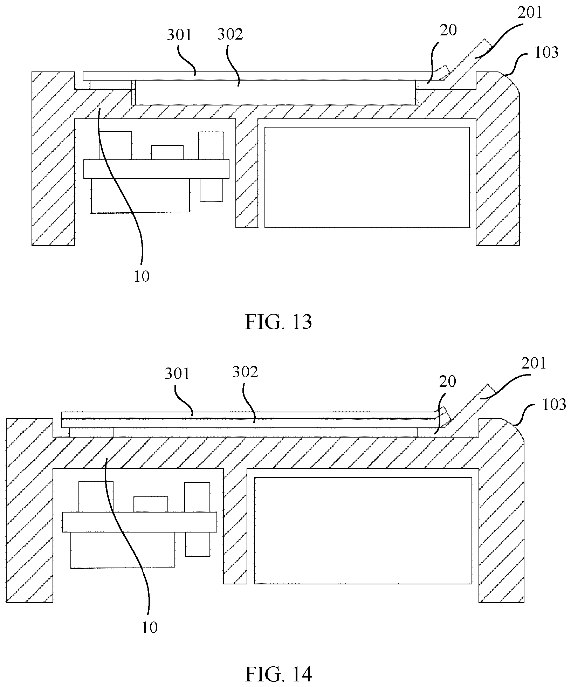

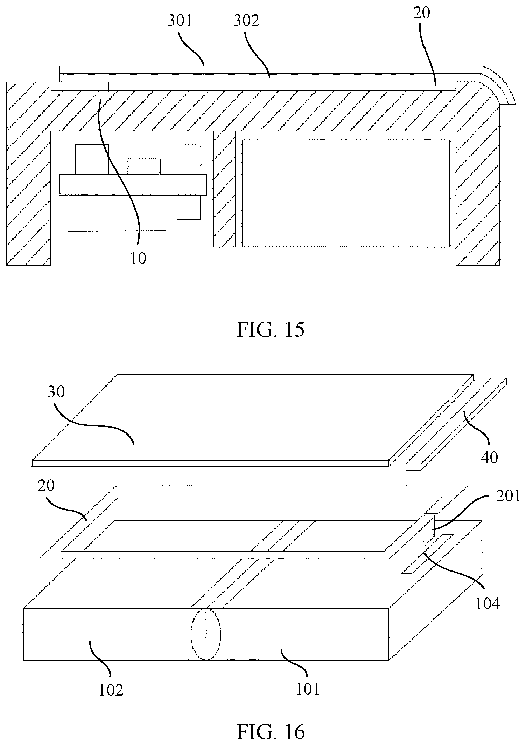

As shown in FIG. 13, the display panel 30 includes a cover 301 and a screen body 302 located between the cover 301 and the frame body 10. A projection area of the cover 301 on the frame body 10 may be greater than a projection area of the screen body 302 on the frame body 10, so that a part of the cover 301 extends outside the screen body 302 in a direction parallel to the screen body 302, and the cover 301 located outside the screen body 302 is connected to the frame body 10 by using the adhesive film 20. Further, in the display panel 30, only the cover 301 may cover the arc-shaped chamfer 103. Certainly, both the cover 301 and the screen body 302 may cover the arc-shaped chamfer 103. As shown in FIG. 14, the adhesive film 20 may be disposed between the screen body 302 and the frame body 10, to implement a connection between the display panel 30 and the frame body 10. Further, as shown in FIG. 15, both the screen body 302 and the cover 301 may cover the arc-shaped chamfer 103, to improve the decorative effect of the electronic device.

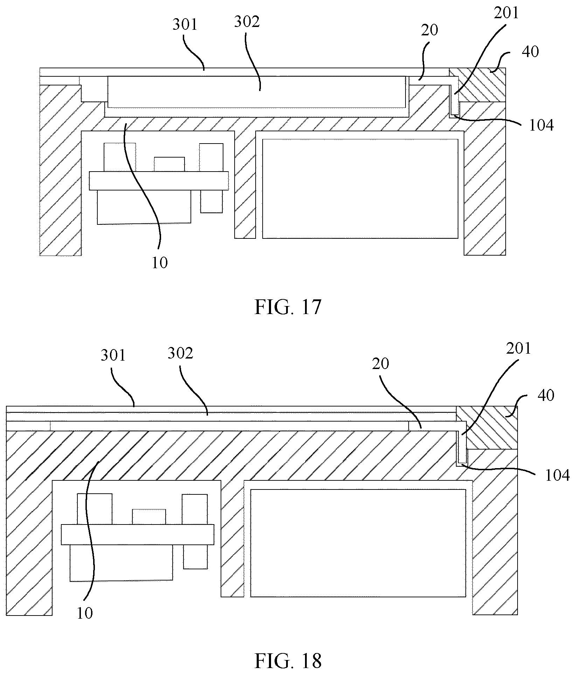

In the embodiment in which the electronic device has the decorative sheet 40, as shown in FIG. 16, the decorative sheet 40 may be further disposed on an outer side surface that is of the first folding portion 101 and that faces the display panel 30, and located on one side of the display panel 30. As shown in FIG. 16 and FIG. 17, the adhesive film 20 may be disposed between the cover 301 and the frame body 10, a groove 104 is disposed on an outer side surface of the frame body 10 and is located outside the projection of the display panel 30 on the frame body 10, the pulling head 201 is disposed in the groove 104, the decorative sheet 40 covers the outer side surface of the frame body 10, and the decorative sheet 40 covers the groove 104. The decorative sheet 40 may prevent the pulling head 201 from protruding from the groove 104 when the electronic device is normally used. When the display panel 30 is disassembled, the decorative sheet 40 is first disassembled from the frame body 10, to expose the groove 104 and the pulling head 201 in the groove 104. Then, the pulling head 201 is taken out from the groove 104, and the pulling head 201 is further pulled, to pull out the adhesive film 20 between the cover 301 and the frame body 10, thereby separating the display panel 30 from the frame body 10.

Alternatively, as shown in FIG. 16 and FIG. 18, the adhesive film 20 may be further disposed between the screen body 302 and the frame body 10, a groove 104 is disposed on an outer side surface of the frame body 10 and is located outside the projection of the display panel 30 on the frame body 10, the pulling head 201 is disposed in the groove 104, the decorative sheet 40 covers the outer side surface of the frame body 10, and the decorative sheet 40 covers the groove 104. The decorative sheet 40 may prevent the pulling head 201 from protruding from the groove 104 when the electronic device is normally used, so as to further prevent the pulling head 201 located outside the display panel 30 and the first folding portion 101 from affecting installation or work of another element in the electronic device. When the display panel 30 is disassembled, the decorative sheet 40 is first disassembled from the frame body 10, to expose the groove 104 and the pulling head 201 in the groove 104. Then, the pulling head 201 is taken out from the groove 104, and the pulling head 201 is further pulled, to pull out the adhesive film 20 between the screen body 302 and the frame body 10, thereby separating the display panel 30 from the frame body 10.

Based on the embodiment in which the electronic device is a folding device, an accommodation hole 105 may be disposed on the frame body 10, the accommodation hole 105 passes through the frame body 10, and a corresponding pulling head 201 may be disposed in the accommodation hole 105, thereby further preventing the pulling head 201 from affecting installation or work of another element in the electronic device.

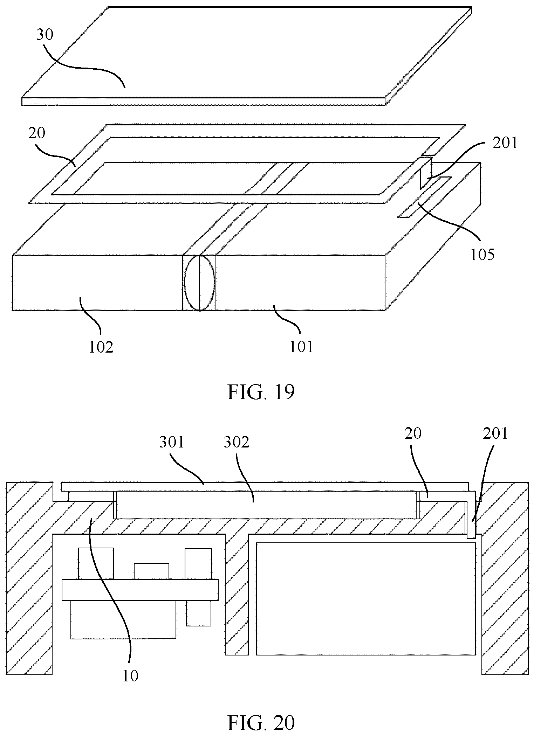

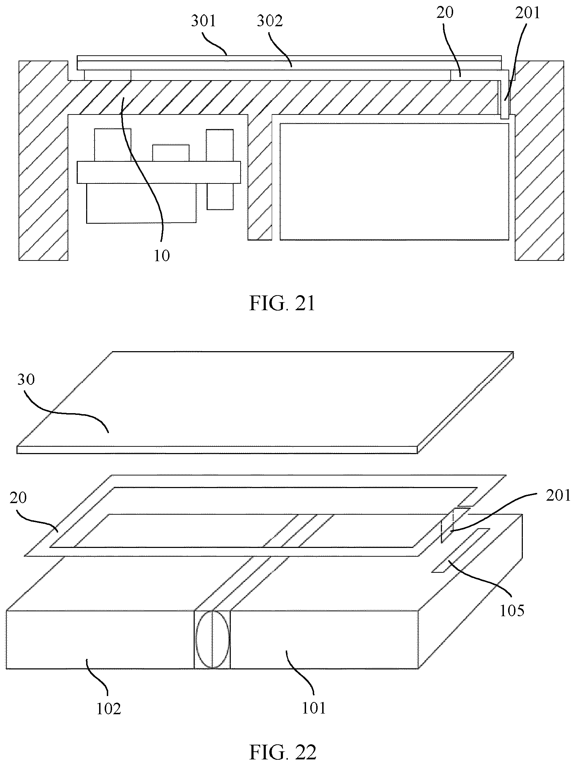

As shown in FIG. 19 to FIG. 21, the pulling head 201 on the adhesive film 20 may be located outside space enclosed by the adhesive film 20, and at least a part of the accommodation hole 105 may be located inside a projection of the display panel 30 on the first folding portion 101, in other words, the display panel 30 covers the accommodation hole 105, so that the pulling head 201 is prevented from protruding from the accommodation hole 105 during use. Alternatively, the accommodation hole 105 is located outside the projection of the display panel 30 on the first folding portion 101. During disassembly, the pulling head 201 may be first pulled inwardly on an inner side of the frame body 10, so that the adhesive film 20 close to the accommodation hole 105 is separated from the display panel 30 and the first folding portion 101. Then, the display panel 30 close to the accommodation hole 105 is separated from the first folding portion 101 by using a suction cup or another tool, and the pulling head 201 is taken out to the outer side of the frame body 10. Then, the pulling head 201 continues to be pulled, to pull out remaining adhesive film 20 between the display panel 30 and the frame body 10. For example, the adhesive film 20 may be disposed between the cover 301 and the frame body 10 (as shown in FIG. 20). Certainly, the adhesive film 20 may also be disposed between the screen body 302 and the frame body 10 (as shown in FIG. 21).

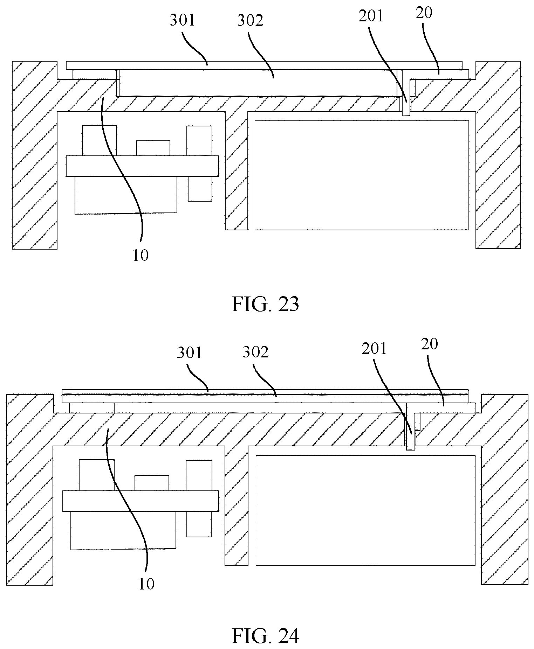

As shown in FIG. 22 to FIG. 24, the pulling head 201 on the adhesive film 20 may be located in space enclosed by the adhesive film 20. Correspondingly, the accommodation hole 105 is disposed inside a projection of the display panel 30 on the first folding portion 101. When the display panel 30 is disassembled, the pulling head 201 may be first pulled inwardly on an inner side of the frame body 10, so that the adhesive film 20 close to the accommodation hole 105 is separated from the display panel 30 and the first folding portion 101. Then, the display panel 30 close to the accommodation hole 105 is separated from the first folding portion 101 by using a suction cup or another tool, and the pulling head 201 is taken out to the outer side of the frame body 10. Then, the pulling head 201 continues to be pulled, to pull out remaining adhesive film 20 between the display panel 30 and the frame body 10. For example, the adhesive film 20 may be disposed between the cover 301 and the frame body 10 (as shown in FIG. 23). Certainly, the adhesive film 20 may also be disposed between the screen body 302 and the frame body 10 (as shown in FIG. 24).

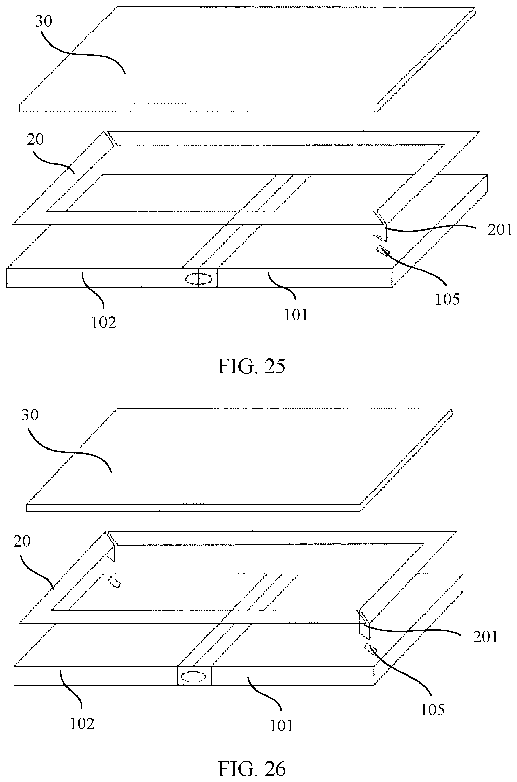

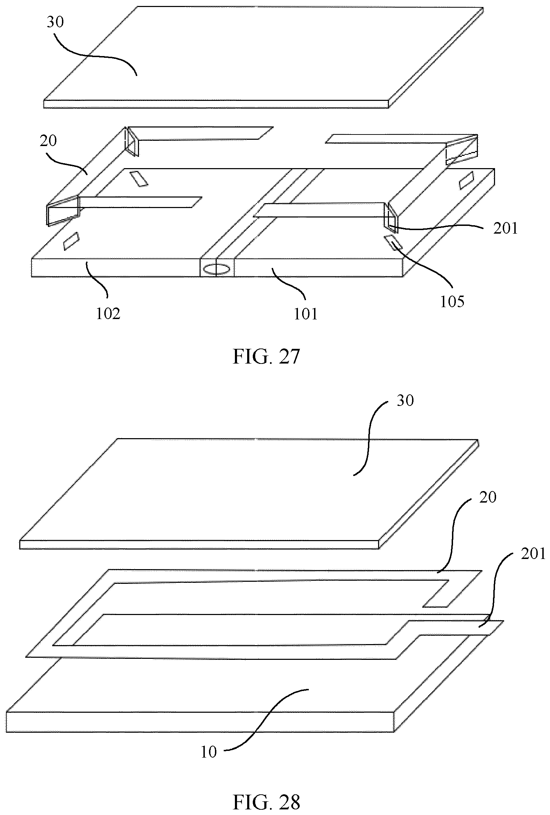

In this embodiment, there may be a plurality of pulling heads 201 disposed on the adhesive film 20. As shown in FIG. 25, two adjacent pulling heads 201 may be disposed in the same accommodation hole 105, thereby reducing a quantity of holes disposed on the frame body 10. As shown in FIG. 26, when a distance between pulling heads 201 is relatively large, one accommodation hole 105 may be correspondingly provided for each pulling head 201, so that each pulling head 201 is disposed in one accommodation hole 105. For example, as shown in FIG. 27, three adhesive films 20 may be sequentially disposed on the first folding portion 101, three adhesive films 20 may be sequentially disposed on the second folding portion 102, and the adhesive films 20 on the frame body 10 are distributed in a rectangular shape. An accommodation hole 105 is disposed between two adjacent adhesive films 20 on the first folding portion 101 and the second folding portion 102, and each of two adhesive films 20 close to the accommodation hole 105 has a pulling head 201 accommodated in the accommodation hole 105, so that two pulling heads 201 are accommodated in each accommodation hole 105.

Based on the embodiment in which the electronic device is a folding device, when the electronic device is installed, the adhesive film 20 may have specified adhesion before hardening. Correspondingly, the adhesive film 20 may be first attached to the first folding portion 101 and the second folding portion 102. Then, the display panel 30 covers the first folding portion 101 and the second folding portion 102, and the display panel 30 is enabled to be in contact with the adhesive film 20. Afterwards, the adhesive film 20 may be hardened through laser irradiation or heating, to implement a connection between the display panel 30 and each of the first folding portion 101 and the second folding portion 102. Certainly, the adhesive film 20 may have no adhesion before hardening. Correspondingly, the adhesive film 20 may be first placed on the first folding portion 101 and the second folding portion 102, and the adhesive film 20 may be hardened through laser irradiation or heating, to implement a connection between the adhesive film 20 and each of the first folding portion 101 and the second folding portion 102. Then, the display panel 30 covers the first folding portion 101 and the second folding portion 102, and the display panel 30 is enabled to be in contact with the adhesive film 20. Afterwards, the adhesive film 20 may be hardened through laser irradiation or heating, to implement a connection between the display panel 30 and each of the first folding portion 101 and the second folding portion 102.

In this embodiment of this application, the electronic device may alternatively be a non-folding device. For example, a display panel may be a liquid crystal display panel (LCD), an inorganic light-emitting diode display panel, an organic light-emitting diode (OLED) display panel, or the like.

As shown in FIG. 28, in this embodiment, devices such as a circuit board and a battery may be disposed on an inner side that is of a frame body 10 and that is away from a display panel 30. For example, when the electronic device is a mobile phone, the frame body 10 may be a middle frame of the mobile phone. When the electronic device is another device, the frame body 10 may be a frame carrying the display panel 30. The display panel 30 covers the frame body 10, and the display panel 30 is connected to the frame body 10 by using an adhesive film 20.

A structure of the non-folding device is substantially the same as that of the folding device. A difference lies in that when the electronic device is a non-folding device, the frame body 10 is a rigid and integral part to carry the display panel 30.

FIG. 28 is a first schematic structural diagram of an adhesive film when an electronic device is a non-folding device. Referring to the description in FIG. 8, a difference lies in that the frame body 10 in FIG. 8 includes the first folding portion 101 and the second folding portion 102 that can be rotated, while the frame body 10 in FIG. 28 is a rigid and integral part.

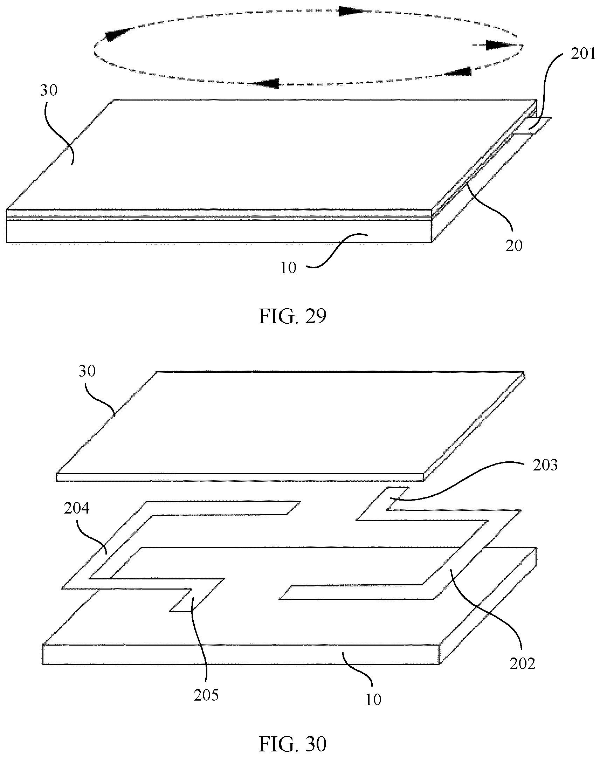

FIG. 29 is a schematic diagram of a direction of pulling a pulling head when an electronic device is a non-folding device. Referring to the description in FIG. 9, a difference lies in that the frame body 10 in FIG. 9 includes the first folding portion 101 and the second folding portion 102 that can be rotated, while a frame body 10 in FIG. 29 is a rigid and integral part. An adhesive film 20 between a display panel 30 and the frame body 10 can be pulled out by pulling a pulling head 201.

FIG. 30 is a second schematic structural diagram of an adhesive film when an electronic device is a non-folding device. Referring to the description in FIG. 10, a difference lies in that the frame body 10 in FIG. 10 includes the first folding portion 101 and the second folding portion 102 that can be rotated, while a frame body 10 in FIG. 30 is a rigid and integral part.

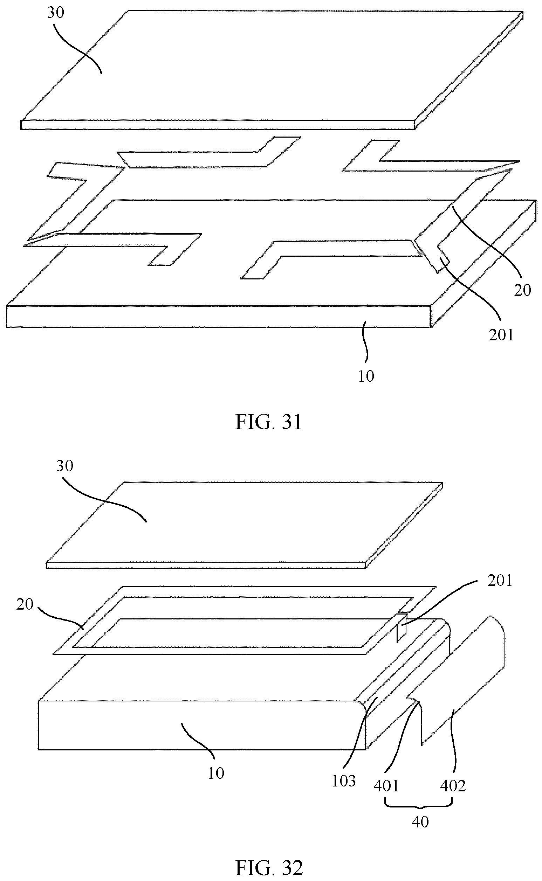

FIG. 31 is a third schematic structural diagram of an adhesive film when an electronic device is a non-folding device. Referring to the description in FIG. 11, a difference lies in that the frame body 10 in FIG. 11 includes the first folding portion 101 and the second folding portion 102 that can be rotated, while a frame body 10 in FIG. 31 is a rigid and integral part.

FIG. 32 is a first schematic diagram of a connection between a decorative sheet and a frame body when an electronic device is a non-folding device. Referring to the description in FIG. 12, a difference lies in that the frame body 10 in FIG. 12 includes the first folding portion 101 and the second folding portion 102 that can be rotated, while a frame body 10 in FIG. 32 is a rigid and integral part. An arc-shaped chamfer 103 is disposed at a junction of an outer side surface of the frame body 10 and a decorative surface.

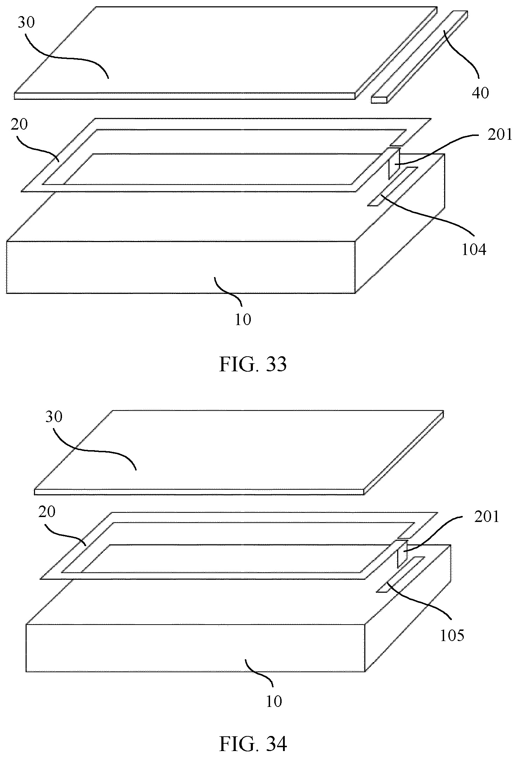

FIG. 33 is a second schematic diagram of a connection between a decorative sheet and a frame body when an electronic device is a non-folding device. Referring to the description in FIG. 16, a difference lies in that the frame body 10 in FIG. 16 includes the first folding portion 101 and the second folding portion 102 that can be rotated, while a frame body 10 in FIG. 33 is a rigid and integral part. A decorative sheet 40 covers an outer side surface of the frame body 10 and is located on one side of the display panel 30, and a groove 104 is disposed on the outer side surface.

FIG. 34 is a first schematic structural diagram in which an accommodation hole is disposed when an electronic device is a non-folding device. Referring to the description in FIG. 19, a difference lies in that the frame body 10 in FIG. 19 includes the first folding portion 101 and the second folding portion 102 that can be rotated, while a frame body 10 in FIG. 34 is a rigid and integral part.

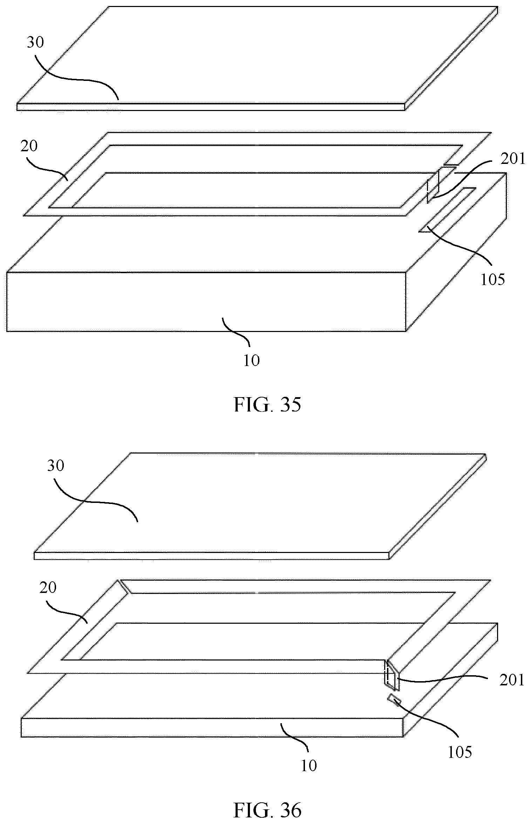

FIG. 35 is a second schematic structural diagram in which an accommodation hole is disposed when an electronic device is a non-folding device. Referring to the description in FIG. 22, a difference lies in that the frame body 10 in FIG. 22 includes the first folding portion 101 and the second folding portion 102 that can be rotated, while a frame body 10 in FIG. 35 is a rigid and integral part. An accommodation hole 105 is disposed inside a projection of a display panel 30 on the frame body 10.

FIG. 36 a first schematic structural diagram in which a plurality of pulling heads are disposed in each accommodation hole when an electronic device is a non-folding device. Referring to the description in FIG. 25, a difference lies in that the frame body 10 in FIG. 25 includes the first folding portion 101 and the second folding portion 102 that can be rotated, while a frame body 10 in FIG. 36 is a rigid and integral part. An accommodation hole 105 is disposed between two adjacent adhesive films 20 on the frame body 10, and each of two adhesive films 20 close to the accommodation hole 105 has a pulling head 201 accommodated in the accommodation hole 105, so that two pulling heads 201 are accommodated in each accommodation hole 105.

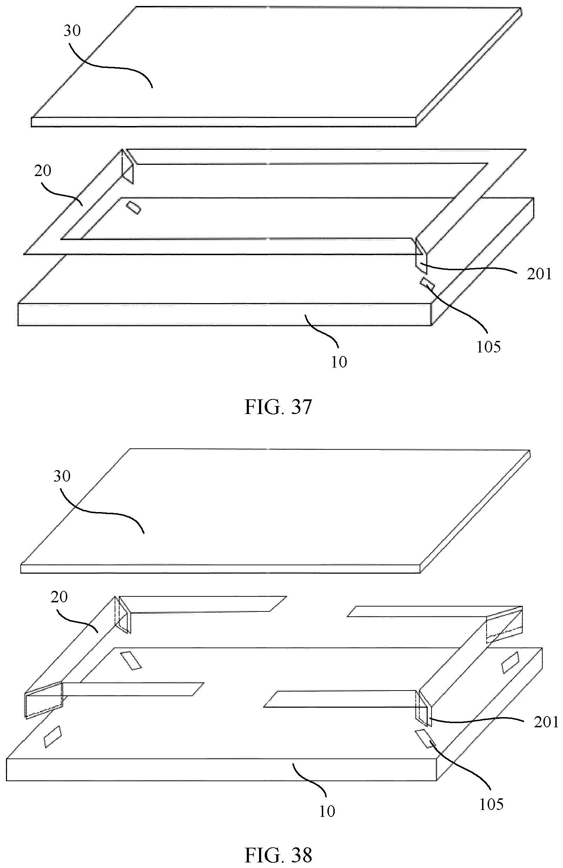

FIG. 37 is a schematic structural diagram in which one pulling head is disposed in each accommodation hole when an electronic device is a non-folding device. Referring to the description in FIG. 26, a difference lies in that the frame body 10 in FIG. 26 includes the first folding portion 101 and the second folding portion 102 that can be rotated, while a frame body 10 in FIG. 37 is a rigid and integral part.

FIG. 38 is a second schematic structural diagram in which a plurality of pulling heads are disposed in each accommodation hole when an electronic device is a non-folding device. Referring to the description in FIG. 27, a difference lies in that the frame body 10 in FIG. 27 includes the first folding portion 101 and the second folding portion 102 that can be rotated, while a frame body 10 in FIG. 38 is a rigid and integral part. Three adhesive films 20 may be sequentially disposed on the right half of the frame body 10, and three adhesive films 20 may be sequentially disposed on the left half of the frame body 10, and the adhesive films 20 on the frame body 10 are distributed in a rectangular shape. An accommodation hole 105 is disposed between two adjacent adhesive films 20 on the right half part and the left half part, and each of two adhesive films 20 close to the accommodation hole 105 has a pulling head 201 accommodated in the accommodation hole 105, so that two pulling heads 201 are accommodated in each accommodation hole 105.

In the electronic device in this embodiment, the adhesive film 20 is disposed along an edge of the display panel 30, the adhesive film 20 is in a strip shape, and one end of the adhesive film 20 has a pulling head 201 that extends outside the display panel 30 and the frame body 10. When the electronic device is maintained, the adhesive film 20 may be separated from the frame body 10 and the display panel 30 by pulling the pulling head 201, and the adhesive film 20 between the frame body 10 and the display panel 30 is gradually pulled out, so that the display panel 30 is separated from the frame body 10, and the display panel 30 is disassembled. The disassembly is relatively easy, force on the display panel 30 is relatively small in the disassembly process, and the display panel 30 is not damaged. In addition, the display panel 30 is connected to the frame body 10 by using the adhesive film 20. Compared with a fact in which the display panel 30 is connected to the frame body 10 by using glue, a part of the display panel 30 can be prevented from being deformed by local force on the display panel 30.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the foregoing embodiments without departing from the scope of the appended claims.

## Claims

1. An electronic device, comprising:
a display panel (30);
a frame body (10); and
an adhesive film (20) disposed between the display panel and the frame body and including a pulling head (201),
wherein the adhesive film is an elastic adhesive film (20), or the adhesive film hardens after subjecting to tension parallel to the display panel, and wherein the adhesive film (20) is configured to be gradually pulled out and separated from the frame body (10) and the display panel (30) by pulling the pulling head (201), so as to separate the display panel (30) from the frame body (10); and
**characterized in that**:
the pulling head (201) of the adhesive film (20) is configured to extend outside the display panel and the frame body;
the electronic device further comprises a decorative sheet (40) configured to cover an outer side surface of the frame body (10); and
the pulling head is disposed between a decorative sheet and the frame body.

2. The electronic device according to claim 1, wherein the adhesive film is in a strip shape, and the adhesive film is disposed along an edge of the display panel.

3. The electronic device according to claim 1 or 2, wherein the decorative sheet covers an outer side surface that is of the frame body and that faces the display panel, and the decorative sheet is located at one end of the display panel.

4. The electronic device according to claim 3, wherein the outer side surface is provided with a groove (104), the pulling head is disposed in the groove, and the decorative sheet covers the groove.

5. The electronic device according to any one of claims 3 to 4, wherein the frame body has a decorative surface adjacent to the outer side surface, an arc-shaped chamfer (103) is disposed at a junction of the outer side surface and the decorative surface, and the decorative sheet covers the arc-shaped chamfer.

6. The electronic device according to claim 5, wherein the decorative sheet comprises a bent portion (401) covering the arc-shaped chamfer and a fixed portion (402) covering the decorative surface.

7. The electronic device according to any one of claims 1 to 6, wherein the frame body comprises a first folding portion (101) and a second folding portion (102) that are rotatably connected, the display panel covers the first folding portion and the second folding portion, and the adhesive film is disposed between the display panel and both of the first folding portion and the second folding portion.

8. The electronic device according to any one of claims 1 to 7, wherein the display panel comprises a cover (301) and a screen body located between the cover and the frame body, and the adhesive film is connected to the cover and the frame body; or
the adhesive film is connected to the screen body and the frame body.

9. The electronic device according to any one of claims 1 to 8, wherein the elastic adhesive film comprises thermoplastic polyurethane rubber, or the elastic adhesive film comprises butyronitrile rubber and phenolic resin, or the adhesive film is an easy-to-pull tape.

10. The electronic device according to any one of claims 1 to 9, wherein the adhesive film has strong adhesion in a direction perpendicular to a plane on which the adhesive film is located, and has elasticity in a direction parallel to the plane on which the adhesive film is located.

## Patentansprüche

1. Elektronische Vorrichtung, umfassend:
ein Anzeigefeld (30);
einen Rahmenkörper (10); und
eine Klebefolie (20), die zwischen dem Anzeigefeld und dem Rahmenkörper angeordnet ist und einen Ziehkopf (201) beinhaltet, wobei die Klebefolie eine elastische Klebefolie (20) ist oder die Klebefolie nach Einwirkung einer parallel zu dem Anzeigefeld verlaufenden Zugspannung aushärtet, und wobei die Klebefolie (20) dazu konfiguriert ist, durch Ziehen des Ziehkopfes (201) graduell von dem Rahmenkörper (10) und dem Anzeigefeld (30) herausgezogen und getrennt zu werden, um das Anzeigefeld (30) von dem Rahmenkörper (10) zu trennen; und
**dadurch gekennzeichnet, dass**:
der Ziehkopf (201) der Klebefolie (20) dazu konfiguriert ist, sich über das Anzeigefeld und den Rahmenkörper hinaus zu erstrecken;
die elektronische Vorrichtung ferner eine dekorative Folie (40) umfasst, die dazu konfiguriert ist, eine äußere Seitenfläche des Rahmenkörpers (10) abzudecken; und
der Ziehkopf zwischen einer dekorativen Folie und dem Rahmenkörper angeordnet ist.

2. Elektronische Vorrichtung nach Anspruch 1, wobei die Klebefolie streifenförmig ist, und die Klebefolie entlang einer Kante des Anzeigefelds angeordnet ist.

3. Elektronische Vorrichtung nach Anspruch 1 oder 2, wobei die dekorative Folie eine äußere Seitenfläche abdeckt, die von dem Rahmenkörper stammt und die dem Anzeigefeld zugewandt ist, und sich die dekorative Folie an einem Ende des Anzeigefelds befindet.

4. Elektronische Vorrichtung nach Anspruch 3, wobei die äußere Seitenfläche mit einer Nut (104) versehen ist, der Ziehkopf in der Nut angeordnet ist und die dekorative Folie die Nut abdeckt.

5. Elektronische Vorrichtung nach einem der Ansprüche 3 bis 4, wobei der Rahmenkörper eine dekorative Oberfläche benachbart an der äußeren Seitenfläche aufweist, eine bogenförmige Abschrägung (103) an einer Verbindung der äußeren Seitenfläche und der dekorativen Oberfläche angeordnet ist, und die dekorative Folie die bogenförmige Abschrägung abdeckt.

6. Elektronische Vorrichtung nach Anspruch 5, wobei die dekorative Folie einen gebogenen Abschnitt (401), der die bogenförmige Abschrägung abdeckt, und einen festen Abschnitt (402) umfasst, der die dekorative Oberfläche abdeckt.

7. Elektronische Vorrichtung nach einem der Ansprüche 1 bis 6, wobei der Rahmenkörper einen ersten Faltabschnitt (101) und einen zweiten Faltabschnitt (102) umfasst, die drehbar verbunden sind, das Anzeigefeld den ersten Faltabschnitt und den zweiten Faltabschnitt abdeckt, und die Klebefolie zwischen dem Anzeigefeld und sowohl dem ersten Faltabschnitt als auch dem zweiten Faltabschnitt angeordnet ist.

8. Elektronische Vorrichtung nach einem der Ansprüche 1 bis 7, wobei das Anzeigefeld eine Abdeckung (301) und einen Bildschirmkörper umfasst, der sich zwischen der Abdeckung und dem Rahmenkörper befindet, und die Klebefolie mit der Abdeckung und dem Rahmenkörper verbunden ist; oder
die Klebefolie mit dem Bildschirmkörper und dem Rahmenkörper verbunden ist.

9. Elektronische Vorrichtung nach einem der Ansprüche 1 bis 8, wobei die elastische Klebefolie thermoplastischen Polyurethan-Kautschuk umfasst, oder die elastische Klebefolie Butyronitril-Kautschuk und Phenolharz umfasst, oder die Klebefolie ein leicht zu ziehendes Band ist.

10. Elektronische Vorrichtung nach einem der Ansprüche 1 bis 9, wobei die Klebefolie eine starke Haftung in einer Richtung senkrecht zu einer Ebene, auf welcher sich die Klebefolie befindet, aufweist und Elastizität in einer Richtung parallel zu der Ebene, auf welcher sich die Klebefolie befindet, aufweist.

## Revendications

1. Dispositif électronique, comprenant :
un panneau d'affichage (30) ;
un corps de cadre (10) ; et
un film adhésif (20) disposé entre le panneau d'affichage et le corps de cadre et comportant une tête de traction (201),
dans lequel le film adhésif est un film adhésif élastique (20), ou le film adhésif durcit après avoir été soumis à une tension parallèle au panneau d'affichage, et dans lequel le film adhésif (20) est configuré pour être progressivement retiré et séparé du corps de cadre (10) et du panneau d'affichage (30) en tirant sur la tête de traction (201), de manière à séparer le panneau d'affichage (30) du corps de cadre (10) ; et
**caractérisé en ce que** :
la tête d'extraction (201) du film adhésif (20) est configurée pour s'étendre à l'extérieur du panneau d'affichage et du corps de cadre ;
le dispositif électronique comprend en outre une feuille décorative (40) configurée pour recouvrir une surface latérale extérieure du corps de cadre (10) ; et
la tête de traction est disposée entre une feuille décorative et le corps de cadre.

2. Dispositif électronique selon la revendication 1, dans lequel le film adhésif est en forme de bande, et le film adhésif est disposé le long d'un bord du panneau d'affichage.

3. Dispositif électronique selon la revendication 1 ou 2, dans lequel la feuille décorative recouvre une surface latérale extérieure qui est du corps de cadre et qui fait face au panneau d'affichage, et la feuille décorative est située à une extrémité du panneau d'affichage.

4. Dispositif électronique selon la revendication 3, dans lequel la surface latérale extérieure est pourvue d'une rainure (104), la tête d'extraction est disposée dans la rainure, et la feuille décorative recouvre la rainure.

5. Dispositif électronique selon l'une quelconque des revendications 3 à 4, dans lequel le corps de cadre a une surface décorative adjacente à la surface latérale extérieure, un chanfrein en forme d'arc (103) est disposé à une jonction de la surface latérale extérieure et de la surface décorative, et la feuille décorative recouvre le chanfrein en forme d'arc.

6. Dispositif électronique selon la revendication 5, dans lequel la feuille décorative comprend une partie pliée (401) recouvrant le chanfrein en forme d'arc et une partie fixe (402) recouvrant la surface décorative.

7. Dispositif électronique selon l'une quelconque des revendications 1 à 6, dans lequel le corps de cadre comprend une première partie pliable (101) et une seconde partie pliable (102) qui sont reliées de manière rotative, le panneau d'affichage recouvre la première partie pliable et la seconde partie pliable, et le film adhésif est disposé entre le panneau d'affichage et la première partie pliable et la seconde partie pliable.

8. Dispositif électronique selon l'une quelconque des revendications 1 à 7, dans lequel le panneau d'affichage comprend un couvercle (301) et un corps d'écran situé entre le couvercle et le corps de cadre, et le film adhésif est relié au couvercle et au corps de cadre ; ou
le film adhésif est relié au corps d'écran et au corps de cadre.

9. Dispositif électronique selon l'une quelconque des revendications 1 à 8, dans lequel le film adhésif élastique comprend du caoutchouc de polyuréthane thermoplastique, ou le film adhésif élastique comprend du caoutchouc de butyronitrile et de la résine phénolique, ou le film adhésif est un ruban facile à tirer.

10. Dispositif électronique selon l'une quelconque des revendications 1 à 9, dans lequel le film adhésif a une forte adhérence dans une direction perpendiculaire à un plan sur lequel le film adhésif est situé, et est élastique dans une direction parallèle au plan sur lequel le film adhésif est situé.
